# EUROPÄISCHE PATENTSCHRIFT

(11) **EP 0 818 352 B1**
(45) Veröffentlichungstag und Bekanntmachung des Hinweises auf die Patenterteilung: **03.04.2002**
(21) Anmeldenummer: 97111412.9
(22) Anmeldetag: 05.07.1997
(51) Int. Cl.: B60Q 1/14

(54) **Lenkstockschalter für ein Kraftfahrzeug**
Steering column switch for motor vehicles
Commutateur fixé à la colonne de direction de véhicules à moteur

(30) Priorität: 11.07.1996 DE 19627976
(43) Veröffentlichungstag der Anmeldung: 14.01.1998
(73) Patentinhaber: Delphi Technologies, Inc., Troy, MI 48084 (US)
(72) Erfinder: Rudolph, Gerd, 55459 Aspisheim (DE); Leuschner, Markus, 55559 Bretzenheim (DE); Luley, Reiner, 55129 Mainz (DE)
(74) Vertreter: Becker, Bernd, Dipl.-Ing.

(56) Entgegenhaltungen:
- WO-A-96/23675
- DE-A- 3 532 532

## Beschreibung

Die Erfindung bezieht sich auf einen Lenkstockschalter für ein Kraftfahrzeug mit einem in einem Gehäuse untergebrachten Schalter für zumindest Stand- sowie Fahrtlicht und/oder Fahrtrichtungsanzeige.

Lenkstockschalter werden üblicherweise an der Lenksäule des Kraftfahrzeuges derart befestigt, daß der Lenkstockschalter radial zur Lenksäule an deren Mantelrohr angebracht ist, wodurch bei Betätigung des Lenkrades und damit der im Mantelrohr geführten Lenkspindel der Lenkstockschalter gegenüber dem Lenkrad unbeweglich ist. Eine Mehrzahl von Schaltfunktionen, beispielsweise Fahrtrichtungsanzeige, Standlicht und Abblendlicht, sind in einem Lenkstockschalter integriert. Solche Lenkstockschalter für Kraftfahrzeuge sind beispielsweise aus der DE-AS 28 10 790 und der DE 35 32 532 C2 bekannt.

Für die Scheinwerfer eines Kraftfahrzeuges ist in der Regel eine Leuchtweitenregulierung erforderlich, um die Scheinwerfer in Abhängigkeit von der Belastung bzw. Beladung des Kraftfahrzeuges zu verstellen, damit eine optimale Ausleuchtung der Fahrbahn gewährleistet ist. Hierzu ist im Armaturenbrett des Kraftfahrzeuges ein Leuchtweiten-Regulierschalter vorgesehen, dessen Betätigungsorgan häufig als ein in vertikaler Richtung drehbares Schaltrad ausgebildet ist. Dieses Schalterad ist zwischen zwei Endstellungen stufenweise oder auch stufenlos verdrehbar. Entsprechend der eingenommenen Position des Schalthebels werden die Scheinwerfer des Kraftfahrzeuges elektromotorisch verstellt. Die räumliche Lage des Leuchtweiten-Regulierschalters ist insofern nachteilig, als sich der Leuchtweiten-Regulierschalter relativ weit entfernt im Bedienungsbereich des Kraftfahrzeugführers befindet. Darüber hinaus ist eine separate Ausbildung und Verkabelung des Leuchtweiten-Regulierschalters erforderlich. Es ist daher wünschenswert, den Leuchtweiten-Regulierschalter ebenso im näheren Handhabungsbereich des Kraftfahrzeugführers anzuordnen,, wie beispielsweise den Fahrtrichtungs-Betätigungshebel oder den Scheibenwischer-Betätigungshebel.

Der Erfindung liegt die Aufgabe zugrunde, einen Lenkstockschalter der eingangs genannten Art zu schaffen, der gleichzeitig die Funktion der Leuchtweitenregulierung für die Scheinwerfer eines Kraftfahrzeuges übernimmt, wobei dieser einfach und kostengünstig herstellbar und leicht bedienbar sein soll.

Erfindungsgemäß wird die Aufgabe dadurch gelöst, daß in das Gehäuse zusätzlich ein Leuchtweiten-Regulierschalter zur Verstellung der Scheinwerfer des Kraftfahrzeuges integriert ist.

Durch diese Maßnahme ist der Leuchtweiten-Regulierschalter unmittelbar räumlich dem Fahrtlichtschalter und/oder dem Blinkerschalterdes Kraftfahrzeuges zugeordnet. Damit befindet sich der Leuchtweiten-Regulierschalter im unmittelbaren Betätigungsbereich des Kraftfahrzeugführers und kann daher leicht gehandhabt werden. Darüber hinaus erfordert der erfindungsgemäße Lenkstockschalter keinen besonders erhöhten zusätzlichen Bauaufwand zur Aufnahme des Leuchtweiten-Regulierschalters, da dessen Funktionselemente insgesamt im Gehäuse des Lenkstockschalters untergebracht sind. Somit ist der Lenkstockschalter mit der zusätzlichen Funktion der Leuchtweitenregulierung ohne größeren Aufwand leicht und kostengünstig herstellbar. Fertigungstechnisch besonders vorteilhaft ist dabei, daß der Lenkstockschalter und der Leuchtweiten-Regulierschalter als eine Baueinheit ausgebildet sind.

Bei einer vorteilhaften Ausgestaltung der Erfindung weist der Leuchtweiten-Regulierschalter alsBetätigungsorgan ein Rändelrad auf. Ein solches Rändelrad ist durch seine Rändelung an der Außenkontur für den Kraftfahrzeugführer naturgemäß leicht zu bedienen.

Nach einer Ausbildungsvariante des Lenkstockschalters ist das Rändelrad stufenlos zwischen zwei Endstellungen (0...n) drehbar. Hierbei kann ohne irgendwelche Raststufenbegrenzungen eine Drehung des Rändelrades vorgenommen werden. Gemäß einer anderen Ausbildungsvariante ist das Rändelrad stufenweise zwischen zwei Endstellungen (0...n) drehbar. Durch die stufenweise Rastung des Rändelrades kann schon gefühlsmäßig der Kraftfahrzeugführer feststellen, wenn das Rändelrad von einer Raststufe zu einer anderen Raststufe oder zu einer seiner Endstellungen verdreht wird. Die 0-Endstellung bildet hierbei die Normalstellung für die Scheinwerfer im unbeladenen und unbelasteten Zustand des Kraftfahrzeuges. Die n-Endstellung hingegen, die beispielsweise die Stufe "3" darstellen kann, bildet dagegen die obere Endstellung der Scheinwerfer bei der höchsten zulässigen Beladung bzw. Belastung des Kraftfahrzeuges. Schließlich ist nach einer weiteren Ausbildungsvariante das Rändelrad rastend aus einer Endstellung "0" stufenlos in die Stellungen (1...n) drehbar, d.h., daß, um aus der Endstellung "0" in eine der weiteren nachfolgenden Schaltstellungen 1 bis n zu gelangen, ein gewisser merklicher Widerstand überwunden werden muß. Dem Fahrzeugbenutzer wird damit signalisiert, daß die Leuchtweitenregulierung ihre Grundeinstellung "0" verläßt.

In weiterer Ausbildung des erfindungsgemäßen Lenkstockschalters ragt das Rändelrad teilweise aus dem Gehäuse hervor und der hervorragende Teil des Rändelrades ist teilweise von einer eingeschnittenen Gehäuseblende überdeckt. Zweckmäßigerweise ist die nicht von der Gehäuseblende überdeckte obere Sichtfläche des Rändelrades mit Symbolen zur Anzeige seiner jeweiligen Schaltstellung versehen. Dadurch kann der Kraftfahrzeugführer, da sich das entsprechende Symbol im Bereich der Einschnitte der Gehäuseblende befindet, jederzeit leicht feststellen, welche Stellung der Leuchtweiten-Regulierschalter eingenommen hat.

Um die Bedienbarkeit und Drehbarkeit des Leuchtweiten-Regulierschalters weiter zu verbessern, ist bevorzugt das Rändelrad an seiner Unterseite mit wenigstens einem Griffelement versehen. Zweckmäßigerweise besteht das Griffelement aus einem Nocken oder einer Vertiefung. Vorteilhafterweise sind mehrere solcher Nocken oder Vertiefungen an der Unterseite des Rändelrades angeordnet, wodurch diese einen Betätigungsbereich bilden.

In Weiterbildung der Erfindung ist das Rändelrad auf einem gehäuseseitigen,vertikalen Achszapfen drehbar gelagert. Dieser Achszapfen kann gleichzeitig mit dem Gehäuse des Lenkstockschalters in einem Formvorgang hergestellt werden.

Um die Drehbewegung des Rändelrades in elektrische Signale umwandeln zu können, steht bevorzugt das Rändelrad über ein Kontaktelement mit einer im Gehäuse angeordneten Leiterplatte in Verbindung. Dabei ist das Kontaktelement zweckmäßigerweise als federbelastete Kontaktbrücke ausgebildet. Die federbelastete Kontaktbrücke stellt somit, entsprechend ihrer jeweiligen Stellung, einen Kontakt mit der Leiterplatte her, der über einen Elektromotor für die Verstellung der Scheinwerfer des Kraftfahrzeuges sorgt. Hierbei sind die Kontaktbrücke und die zugehörige Feder in ein am Rändelrad angeordnetes Schaltglied eingesetzt, wobei die Kontaktbrücke mit auf der Leiterplatte angeordneten Schaltkontakten zusammenwirkt. Die für die Leuchtweitenregulierung benötigten, elektrischen Anschlüsse werden unmittelbar an den Schaltkontakten der Leiterplatte befestigt, die mit der Leiterplatte verlötet sind. Darüber hinaus sind die Leiterbahnen der Leiterplatte mit Anschlußkontakten einer am Gehäuse angeordneten Steckkupplung verbunden. Somit ist für den Leuchtweiten-Regulierschalter kein gesonderter Kabelbaum und kein gesonderter Stecker nötig, was den baulichen Aufwand und somit die Herstellungskosten des Lenkstockschalters wesentlich reduziert.

In weiterer Fortbildung der Erfindung kann vorgesehen werden, daß mittels des Rändelrades zusätzlich ein Dimmer der Beleuchtung des Fahrgastraumes und/oder der Armaturenbrett-Beleuchtung durchführbar ist. Weiterhin ist es auch möglich, über das Rändelrad zusätzlich das Nebellicht und/oder das Nebelschlußlicht ein- und auszuschalten.

Die Erfindung wird im folgenden anhand eines Ausführungsbeispieles unter Bezugnahme auf die zugehörige Zeichnung näher erläutert. Es zeigt:
- Fig. 1: eine perspektivische Draufsicht auf einen erfindungsgemäßen Lenkstockschalter,

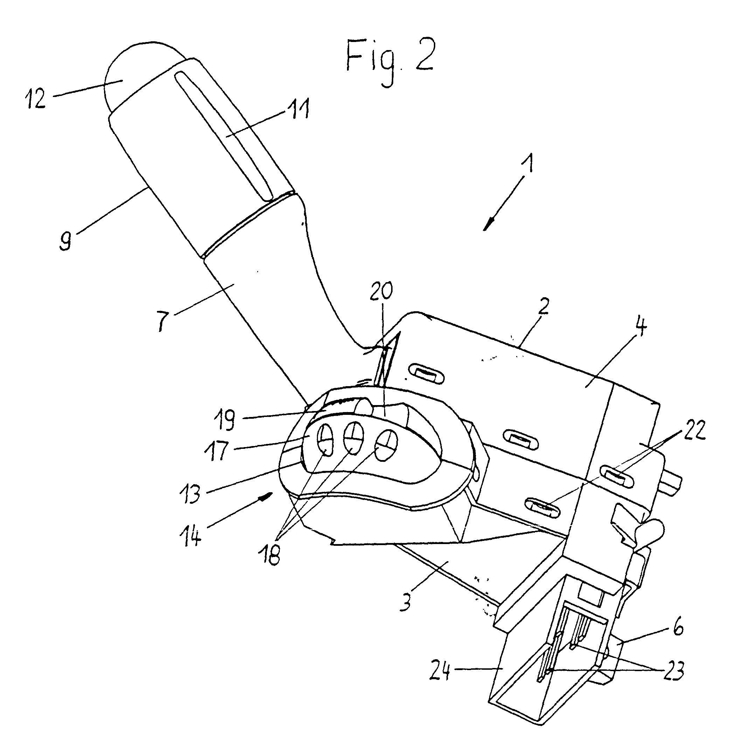

- Fig. 2: eine perspektivische des Lenkstockschalters nach Fig. 1,

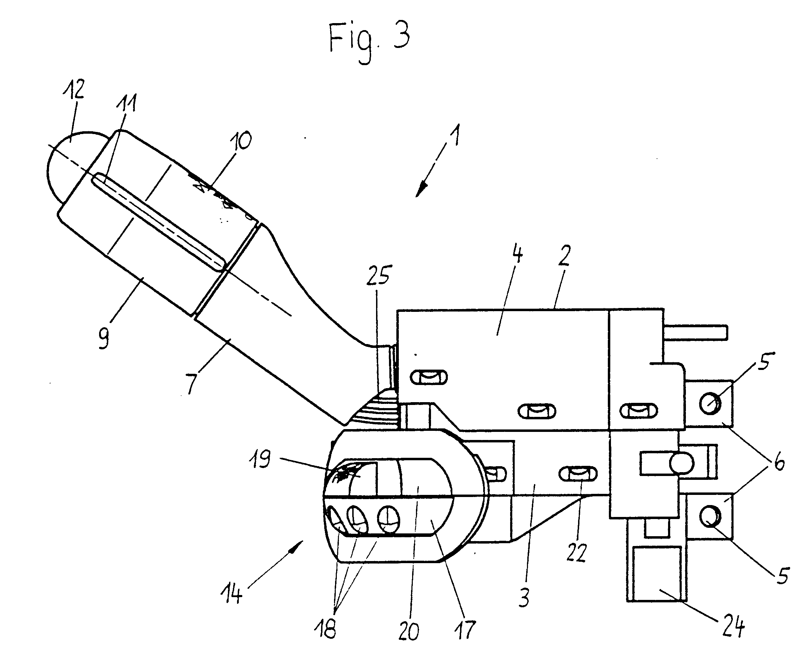

- Fig. 3: eine Seitenansicht des Lenkstockschalters gemäß den Fig. 1 und 2,

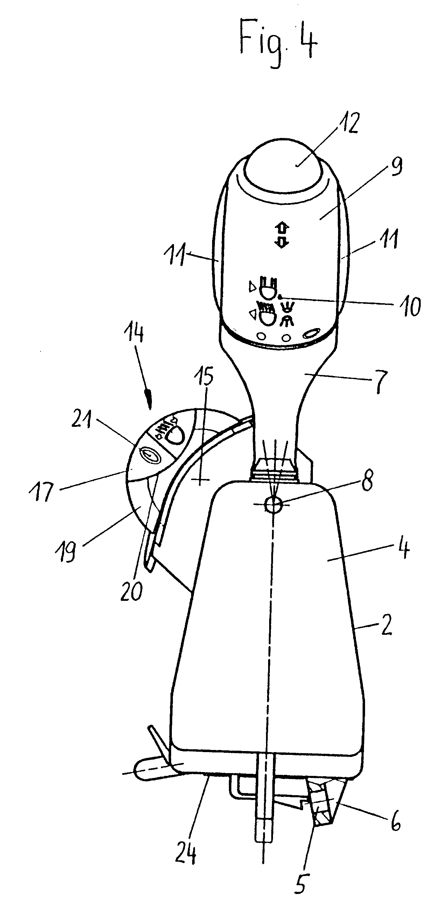

- Fig. 4: eine Draufsicht auf den Lenkstockschalter gemäß den Fig. 1 und 2,

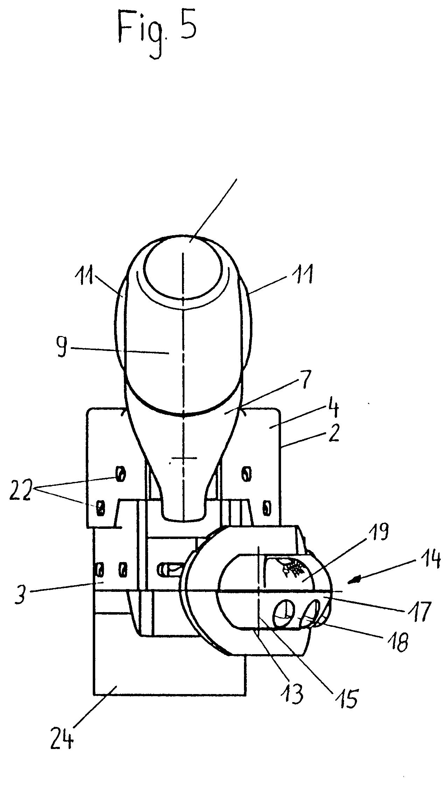

- Fig. 5: eine Vorderansicht des Lenkstockschalters gemäß den Fig. 1 und 2,

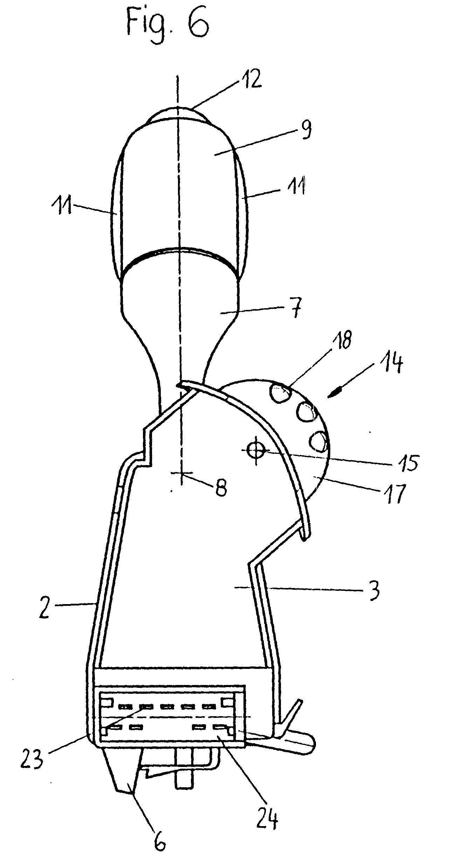

- Fig. 6: eine Unteransicht des Lenkstockschalters gemäß den Fig. 1 und 2,
- Fig. 7: eine Explosivdarstellung des Gehäuses und der darin integrierten Bauteile des Lenkstockschalters und
- Fig. 8: eine Explosivdarstellung des Gehäuses und der darin integrierten Bauteile in umgekehrter Sichtrichtung nach Fig. 7.

Der Lenkstockschalter 1 wird mittels geeigneter Befestigungselemente am die Lenkspindel umgebenden, gegenüber der drehbaren Lenkspindel starren Mantelrohr der Lenksäule fest angebracht ist. Der Lenkstockschalter 1 umfaßt ein Gehäuse 2, das in einen unteren Gehäusesockel 3 und in einen oberen Gehäusedeckel 4 untergebracht ist. Am Gehäusesockel 3 und am Gehäusedeckel 4 sind mit Bohrlöchern 5 versehene Befestigungsstege 6 angeformt, die zur Befestigung des Lenkstockschalters 1 an einer nicht durch Strich-Punkt-Strich-Linie angedeuteten Lenkradverkleidung vorgesehen sind, die das Mantelrohr und die darin geführte Lenkspindel des Kraftfahrzeug-Lenkstockes umgibt.

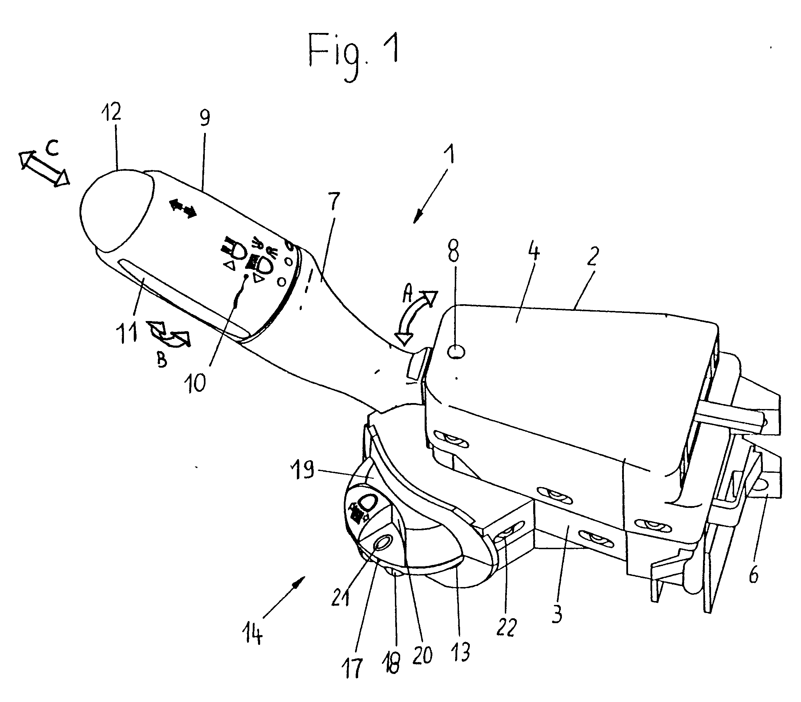

In das Gehäuse 2 mündet ein Betätigungshebel 7 eines in den Lenkstockschalter 1 integrierten Blinkerschalters ein, der gemäß dem Pfeil A in Fig. 1 um eine Achse 8 aus einer Normalstellung in jeweils eine benachbarte Endstellung verschwenkbar ist. Im Endbereich des Betätigungshebels 7 weist dieser einen Drehschalter 9 auf, der mit einer Reihe von Symbolen 10 versehen ist, die der Darstellung der Funktionen für Abblendlicht, Fernlicht, Standlicht und dienen. Des weiteren besitzt der Drehschalter 9 umfangsseitig mindestens einen Betätigungssteg 11, um den Drehschalter 9 leicht handhaben und in Richtung des Doppelpfeiles B gemäß Fig. 1 drehen zu können. Endseitig ist in den Betätigungshebel 7 eine Drucktaste 12, beispielsweise für die Betätigung der Lichthupe eingelassen, wie es durch de Doppelpfeil C gemäß Fig. 1 angedeutet ist.

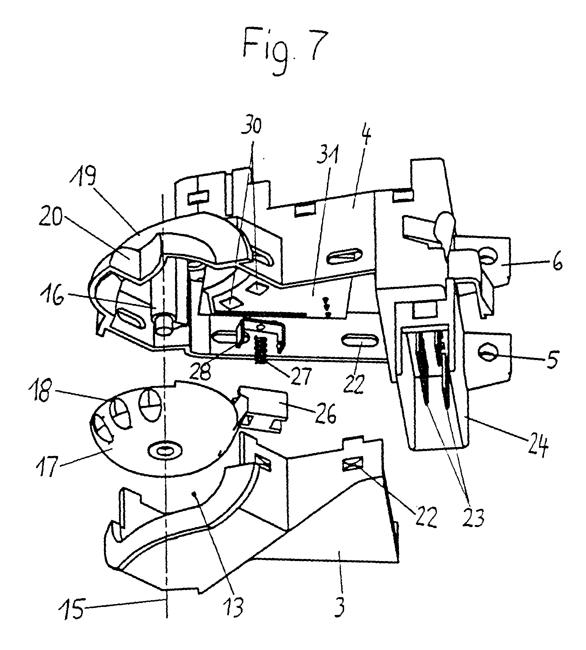

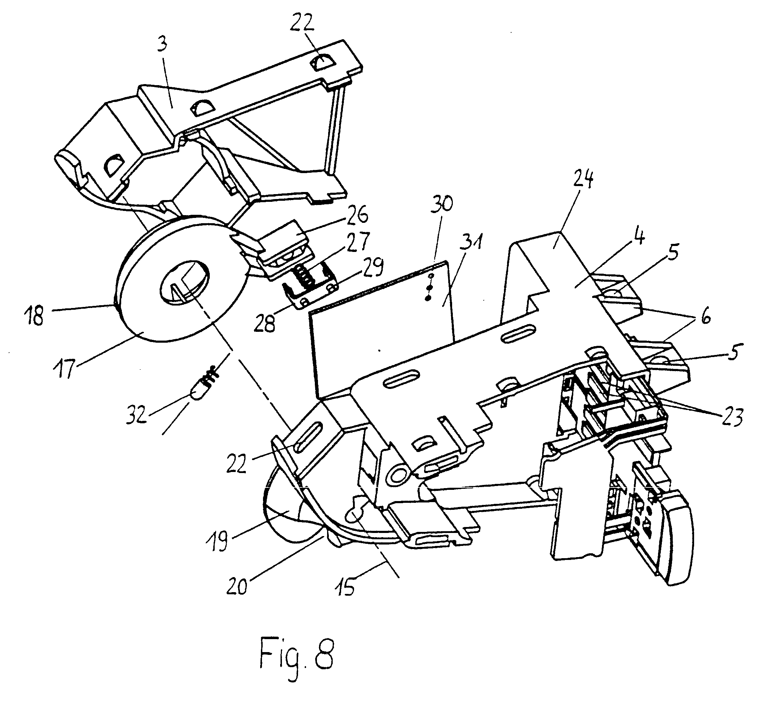

In eine am Gehäusesockel 3 ausgeformte Öffnung 13 ist ein Leuchtweiten-Regulier-schalter 14 eingesetztder als Betätigungsorgan ein Rändelrad 17 umfaßt, das auf einem in einer Drehachse 15 liegenden, vertikalen Achszapfen 16 drehbar ist, wie dies insbesondere aus den Fig. 7 und 8 hervorgeht. An der Unterseite des Rändelrades 17 sind eine Mehrzahl von Nocken 18 als Handhabungshilfe zum Betätigen des Rändelrades 17 ausgeformt.

Oberhalb des horizontal liegenden Rändelrades 17 ist eine Gehäuseblende 19 angeordnet, die mit einem kreissegmentförmigen Einschnitt 20 versehen ist. Dieser Einschnitt gibt dem Kraftfahrzeugführer den Blick auf die dadurch entstandene Sichtfläche des Rändelrades 17 frei, auf der Schaltsymbole 21 (0...n) angebracht sind, die der jeweiligen Schaltstufe des Leuchtweiten-Regulierschalters 14 entsprechen. Dabei bilden die Stufen "0" bzw. "n" die jeweils entgegengesetzten Endstellungen des Rändelrades 17 und damit die entsprechenden Verstellungsgrenzen der Scheinwerfer des Kraftfahrzeuges. Der Gehäusesockel 3 und der Gehäusedeckel 4 sind durch entsprechende Klipsverbindungen 22 miteinander verbunden, wobei der Leuchtweiten-Regulierschalter 14 im wesentlichen in das Gehäuse 2 integriert ist. Am dem dem nicht dargestellten Mantelrohr der Lenkspindel zugewandten Ende des Gehäuses 2 ist eine eine Vielzahl elektrischer Anschlußkontakte 23 aufweisende Vielfach-Steckkupplung 24 ausgebildet. An diese Steckkupplung 24 wird bei der Montage des Lenkstockschalters 1 ein entsprechendes, nicht gezeigtes angeschlossen, um eine elektrische Verbindung mit dem Stromversorgungsnetz des Kraftfahrzeuges herzustellen, wobei die Anschlußkontakte 23 auch mit im Betätigungshebel 7 geführten elektrischen Kabel 25 verbunden sind.

Wie insbesondere aus den Fig. 7 und 8 ersichtlich ist, weist das Rändelrad 17 ein daran angeformtes Schaltglied 26 auf, in das eine durch eine Druckfeder 27 beaufschlagte Kontaktbrücke 28 eingesetzt. Die Kontaktbrücke 28 ist mit Kontaktnocken 29 versehen, die mit entsprechenden Schaltkontakten 30 einer Leiterplatte 31 im montierten Zustand des Lenkstockschalters 1 zusammenwirken. Die Leiterplatte 31 ist im Gehäusedeckel 4 des Gehäuses 2 untergebracht. Darüber hinaus ist ein federbelasteter Raststift 32 vorgesehen, der in nicht dargestellte Rastausschnitte des Gehäuses 2 in Abhängigkeit von der Stellung des Rändelrades 17 einrastet.

Bei Drehen des Rändelrades 17 um den Achszapfen 16 durch Erfassen der als Nocken ausgebildeten Griffelemente 18 dreht sich somit das am Rändelrad 17 angeordnete Schaltglied 26 mit, so daß die darin eingesetzte, federbelastete Kontaktbrücke 28 mit einem entsprechenden Schaltkontakt 30 der Leiterplatte 31 in Berührungskontakt kommt. Die auf der Leiterplatte 31 angebrachten Schaltbahnen münden in die Anschlußkontakte 23 der Steckkupplung 24 und leiten elektrische Signale zum Stromversorgungsnetz des Kraftfahrzeuges weiter, wodurch dessen Scheinwerfer über ein Elektromotor stufenweise zwischen zwei Endstellungen (0...n) verstellt werden können.

## Patentansprüche

1. Lenkstockschalter für ein Kraftfahrzeug mit einem in einem Gehäuse untergebrachten Schalter für zumindest Stand- sowie Fahrtlicht und/oder Fahrtrichtungsanzeige, **dadurch gekennzeichnet, daß** in das Gehäuse (2) zusätzlich ein Leuchtweiten-Regulierschalter (14) zur Verstellung der Scheinwerfer des Kraftfahrzeuges integriert ist.

2. Lenkstockschalter nach Anspruch 1, **dadurch gekennzeichnet, daß** der Leuchtweiten-Regulierschalter (14) als Betätigungsorgan einRändelrad (17) aufweist.

3. Lenkstockschalter nach Anspruch 2, **dadurch gekennzeichnet, daß** das Rändelrad (17) stufenlos zwischen zwei Endstellungen (0...n) drehbar ist.

4. Lenkstockschalter nach Anspruch 2, **dadurch gekennzeichnet, daß** das Rändelrad (17) stufenweise zwischen zwei Endstellungen (0...n) drehbar ist.

5. Lenkstockschalter nach Anspruch 2, **dadurch gekennzeichnet, daß** das Rändelrad (17) rastend aus einer Endstellung "0" stufenlos in die Stellungen (1...n) drehbar ist.

6. Lenkstockschalter nach einem der Ansprüche 2 bis 5, **dadurch gekennzeichnet, daß** das Rändelrad (17) teilweise aus dem Gehäuse (2) hervorragt, und der hervorragende Teil des Rändelrades (17) teilweise von einer eingeschnittenen Gehäuseblende (19) überdeckt ist.

7. Lenkstockschalter nach einem der Ansprüche 2 bis 6, **dadurch gekennzeichnet, daß** die nicht von der Gehäuseblende (19) überdeckte obere Sichtfläche (20) des Rändelrades (17) mit Symbolen (21) zur Anzeige seiner jeweiligen Schaltstellung versehen ist.

8. Lenkstockschalter nach einem der Ansprüche 2 an seiner Unterseite mit wenigstens einem Griffelement (18) versehen ist.

9. Lenkstockschalter nach Anspruch 8, **dadurch gekennzeichnet, daß** das Griffelement (18) aus einem Nocken oder einer Vertiefung besteht.

10. Lenkstockschalter nach einem der Ansprüche 2 bis 9, **dadurch gekennzeichnet, daß** das Rändelrad (17) auf einem gehäuseseitigen, vertikalen Achszapfen (16) drehbar gelagert ist.

11. Lenkstockschalter nach einem der Ansprüche 2 bis 10, **dadurch gekennzeichnet, daß** das Rändelrad (17) über ein Kontaktelement mit einer im Gehäuse (2) angeordneten Leiterplatte (31) in Verbindung steht.

12. Lenkstockschalter nach Anspruch 11, **dadurch gekennzeichnet , daß** das Kontaktelement als federbelastete Kontaktbrücke (28) ausgebildet ist.

13. Lenkstockschalter nach Anspruch 12, **dadurch gekennzeichnet, daß** die Kontaktbrücke (28) und die zugehörige Feder (27) in ein am Rändelrad (17) angeordnetes Schaltglied (26) eingesetzt sind, wobei die Kontaktbrücke (28) mit auf der Leiterplatte (31) angeordneten Schaltkontakten (30) zusammenwirkt.

14. Lenkstockschalter nach einem der Ansprüche 11 bis 13,
**dadurch gekennzeichnet, daß** die Leiterbahnen der Leiterplatte (31) mit Anschlußkontakten (23) einer am Gehäuse (2) angeordneten Steckkupplung (24) verbunden sind.

15. Lenkstockschalter nach einem der Ansprüche 2 bis 14, **dadurch gekennzeichnet, daß** mittels des Rändelrades (17) zusätzlich ein Dimmer der Beleuchtung des Fahrgastraumes und/oder der Armaturenbrett-Beleuchtung durchführbar ist.

16. Lenkstockschalter nach einem der Ansprüche 2 bis 15, **dadurch gekennzeichnet, daß** über das Rändelrad (17) zusätzlich das Nebellicht und/oder das Nebelschlußlicht ein- und ausschaltbar ist.

## Claims

1. Steering column switch for an automotive vehicle, having a switch accommodated in a housing for indicating at least the parking light as well as the headlight and/or travel direction, **characterised in that** a light-range regulating switch (14) is additionally incorporated in the housing (2) to adjust the headlamps of the automotive vehicle.

2. Steering column switch according to claim 1, **characterised in that** the light-range regulating switch (14) has a knurled wheel (17) as the actuating member.

3. Steering column switch according to claim 2, **characterised in that** the knurled wheel (17) is steplessly rotatable between two end positions (0...n).

4. Steering column switch according to claim 2, **characterised in that** the knurled wheel (17) is stepwisely rotatable between two end positions (0...n).

5. Steering column switch according to claim 2, **characterised in that** the knurled wheel (17) is steplessly rotatable in a locking manner from an end position "0" into the positions (1...n).

6. Steering column switch according to one of claims 2 to 5, **characterised in that** the knurled wheel (17) protrudes partially from the housing (2), and the protruding part of the knurled wheel (17) is partially covered by a serrated housing screen (19).

7. Steering column switch according to one of claims 2 to 6, **characterised in that** the upper visible face (20) of the knurled wheel (17) not covered by the housing screen (19) is provided with symbols (21) to indicate its particular switching position.

8. Steering column switch according to one of claims 2 to 7, **characterised in that** the knurled wheel (17) is provided with at least one gripping member (18) on its underside.

9. Steering column switch according to claim 8, **characterised in that** the gripping member (18) comprises a cam or an indentation.

10. Steering column switch according to one of claims 2 to 9, **characterised in that** the knurled wheel (17) is rotatably mounted on a vertical axle journal (16) on the housing side.

11. Steering column switch according to one of claims 2 to 10, **characterised in that** the knurled wheel (17) communicates with a printed circuit board (31), which is disposed in the housing (2), via a contact element.

12. Steering column switch according to claim 11, **characterised in that** the contact element is in the form of a spring-loaded contact bridge (28).

13. Steering column switch according to claim 12, **characterised in that** the contact bridge (28) and the associated spring (27) are inserted into a switching member (26), which is disposed on the knurled wheel (17), the contact bridge (28) co-operating with switching contacts (30) disposed on the printed circuit board (31).

14. Steering column switch according to one of claims 11 to 13, **characterised in that** the conductor paths of the printed circuit board (31) are connected to connection contacts (23) of a plug-in coupling (24), which is disposed on the housing (2).

15. Steering column switch according to one of claims 2 to 14, **characterised in that** a dimmer for dimming the illumination of the vehicle interior and/or for dimming the instrument panel illumination can additionally be effected by means of the knurled wheel (17).

16. Steering column switch according to one of claims 2 to 15, **characterised in that** the fog light and/or the fog tail light can be additionally switched-on and -off via the knurled wheel (17).

## Revendications

1. Commutateur de colonne de direction pour un véhicule automobile comportant un commutateur logé dans un boîtier, pour au moins des feux de stationnement et des feux de route et/ou l'indication de la direction de marche, **caractérisé en ce que** dans le boîtier (2) est intégré en outre un régulateur de portée lumineuse (14) pour le réglage des phares du véhicule automobile.

2. Commutateur de colonne de direction selon la revendication 1, **caractérisé en ce que** le régulateur de portée lumineuse (14) comporte une roue moletée (17) comme organe d'actionnement.

3. Commutateur de colonne de direction selon la revendication 2, **caractérisé en ce que** la roue moletée (17) peut tourner de façon continue entre deux positions de fin de course (0...n).

4. Commutateur de colonne de direction selon la revendication 2, **caractérisé en ce que** la roue moletée (17) peut tourner par degrés entre deux positions de fin de course (0...n).

5. Commutateur de colonne de direction selon la revendication 2, **caractérisé en ce que** la roue moletée (17) peut tourner de façon continue dans les positions (1...n), en se désencliquetant d'une position de fin de course "0".

6. Commutateur de colonne de direction selon l'une des revendications 2 à 5, **caractérisé en ce que** la roue moletée (17) dépasse partiellement du boîtier (2), et la partie dépassante de la roue moletée (17) est partiellement recouverte par un cache de boîtier (19) entaillé.

7. Commutateur de colonne de direction selon l'une des revendications 2 à 6, **caractérisé en ce que** la face visible supérieure (20), non recouverte par le cache de boîtier (19), de la roue moletée (17), est pourvue de symboles (21) pour indiquer ses positions de commutation respectives.

8. Commutateur de colonne de direction selon l'une des revendications 2 à 7, **caractérisé en ce que** la roue moletée (17) est pourvue sur sa face inférieure d'au moins un élément de prise (18).

9. Commutateur de colonne de direction selon la revendication 8, **caractérisé en ce que** l'élément de prise (18) est constitué d'une came ou d'un renfoncement.

10. Commutateur de colonne de direction selon l'une des revendications 2 à 9, **caractérisé en ce que** la roue moletée (17) est montée de manière à pouvoir tourner sur un axe (16) vertical, du côté du boîtier.

11. Commutateur de colonne de direction selon l'une des revendications 2 à 10, **caractérisé en ce que** la roue moletée (17) est en liaison, par l'intermédiaire d'un élément de contact, avec une plaquette à circuits imprimés (31) disposée dans le boîtier (2).

12. Commutateur de colonne de direction selon la revendication 11, **caractérisé en ce que** l'élément de contact est constitué d'un pont de contact (28) chargé par un ressort.

13. Commutateur de colonne de direction selon la revendication 12, **caractérisé en ce que** le pont de contact (28) et le ressort (27) correspondant sont insérés dans un organe de commutation (26) disposé sur la roue moletée (17), le pont de contact (28) coopérant avec des contacts de commutation (30) disposés sur la plaquette à circuits imprimés (31).

14. Commutateur de colonne de direction selon l'une des revendications 11 à 13, **caractérisé en ce que** les pistes conductrices de la plaquette à circuits imprimés (31) sont reliées à des contacts de connexion (23) d'un connecteur à enfichage (24) disposé sur le boîtier (2).

15. Commutateur de colonne de direction selon l'une des revendications 2 à 14, **caractérisé en ce qu'**au moyen de la roue moletée (17) on peut réaliser en plus un variateur pour l'éclairage de l'habitacle et/ou pour l'éclairage du tableau de bord.

16. Commutateur de colonne de direction selon l'une des revendications 2 à 15, **caractérisé en ce que** les feux anti-brouillard avant et/ou les feux anti-brouillard arrière peuvent être mis en service et hors service par l'intermédiaire de la roue moletée (17).
